# EUROPEAN PATENT APPLICATION

(11) **EP 4 443 817 A1**
(43) Date of publication of application: **09.10.2024**
(21) Application number: 22919781.9
(22) Date of filing: 26.07.2022
(51) Int. Cl.: H04L 9/40, H04L 9/32

(54) **METHOD FOR PROCESSING CLOUD SERVICE IN CLOUD SYSTEM, AND RELATED APPARATUS**

(30) Priority: 11.01.2022 CN 202210028477
(71) Applicant: Huawei Cloud Computing Technologies Co., Ltd., Guizhou 550025 (CN)
(72) Inventor: HU, Kun, Guizhou 550025 (CN); XIONG, Honghuai, Guizhou 550025 (CN); XIE, Wei, Guizhou 550025 (CN)
(74) Representative: Maiwald GmbH
(86) International application number: PCT/CN2022/107838
(87) International publication number: WO 2023/134144

(57) **Abstract**

This application provides a method for processing a cloud service in a cloud system. The cloud system includes a first cloud platform and a second cloud platform. The first cloud platform and the second cloud platform are allied clouds of each other. A first operation apparatus and a first alliance management apparatus are deployed on the first cloud platform. A second operation apparatus and a second alliance management apparatus are deployed on the second cloud platform. The method includes: The second alliance management apparatus receives a local identity credential obtaining request sent by the second operation apparatus, obtains a federal identity credential of a first user from the first alliance management apparatus based on an identity credential of the first user on the first cloud platform, converts the federal identity credential of the first user into an identity credential of the first user on the second cloud platform, and returns, to the second operation apparatus, the identity credential of the first user on the second cloud platform, so that a client of the first user obtains the identity credential, and generates an API invocation request based on the identity credential, thereby implementing procedure collaboration between cloud platforms for the API invocation request.

## Description

This application claims priority to Chinese Patent Application No. 202210028477.5, filed with the China National Intellectual Property Administration on January 11, 2022 and entitled "METHOD FOR PROCESSING CLOUD SERVICE IN CLOUD SYSTEM AND RELATED APPARATUS", which is incorporated herein by reference in its entirety.

### TECHNICAL FIELD

This application relates to the field of cloud computing technologies, and in particular, to a method for processing a cloud service in a cloud system, an apparatus, a computer cluster, a computer-readable storage medium, and a computer program product.

### BACKGROUND

Cloud computing is a new internet-based computing and service mode, and uses an internet technology to aggregate enormous and scalable information technology (information technology, IT) capabilities (namely, computing, storage, network, and other resources) to be provided for users as services.

With development of the cloud computing, increasingly more cloud service providers at home and abroad start to provide cloud services for users. The cloud services may include different types such as infrastructure as a service (Infrastructure as a Service, IaaS), platform as a service (Platform as a Service, PaaS), and software as a service (Software as a Service, SaaS).

In a complex multi-cloud environment, different cloud platforms are independent of each other and are associated with each other. It is common for a user on a cloud platform to use resources of a plurality of cloud platforms based on a service application requirement. However, it is difficult to perform procedure collaboration between cloud platforms for a service invocation request submitted by the user when the user accesses a different cloud platform, thereby affecting user experience.

### SUMMARY

This application provides a method for processing a cloud service in a cloud system. In the method, a plurality of cloud platforms are established as a cloud federation group, an identity credential of a user on a cloud platform is converted into an identity credential on another cloud platform by using a federal identity credential of the user in the cloud federation group, and then a cloud service is invoked across cloud platforms based on the identity credential on the another cloud platform, thereby implementing procedure collaboration between cloud platforms for a service invocation request, and improving user experience. This application further provides an apparatus, a computer cluster, a computer-readable storage medium, and a computer program product that correspond to the method.

According to a first aspect, this application provides a method for processing a cloud service in a cloud system. The cloud system includes a first cloud platform and a second cloud platform, the first cloud platform and the second cloud platform are allied clouds of each other, a first operation apparatus and a first alliance management apparatus are deployed on the first cloud platform, and a second operation apparatus and a second alliance management apparatus are deployed on the second cloud platform.

Specifically, the second alliance management apparatus receives a local identity credential obtaining request sent by the second operation apparatus. The local identity credential obtaining request is used to request to obtain an identity credential of a first user on the second cloud platform, and the local identity credential obtaining request includes an identity credential of the first user on the first cloud platform.

The identity credential may be a credential representing an identity of a user, and the credential can be processed by a cloud platform, to correctly control various types of rights of the user on the corresponding cloud platform. The identity credential may be classified into a local identity credential and a federal identity credential. The local identity credential may be an identity credential on a specific cloud platform, and the federal identity credential is an identity credential that is pre-agreed and that can be identified by each cloud platform. The identity credential carries identity information, and the identity information may include an identifier and a role type. Further, the identity information may further include an identifier of a hosted cloud on which the user is located. For example, the identity credential of the first user on the first cloud platform may be a character string obtained by splicing an identifier of a hosted cloud on which the first user is located, an account of the first user on the hosted cloud, and a role type of the first user.

The second alliance management apparatus may obtain a federal identity credential of the first user from the first alliance management apparatus based on the identity credential of the first user on the first cloud platform, and convert the federal identity credential of the first user into the identity credential of the first user on the second cloud platform. The second alliance management apparatus returns, to the second operation apparatus, the identity credential of the first user on the second cloud platform, to enable a client of the first user to obtain the identity credential, returned by the second operation apparatus, of the first user on the second cloud platform, and generate an application programming interface API invocation request based on the identity credential of the first user on the second cloud platform. The API invocation request is used to invoke a cloud service shared by the second cloud platform.

In the method, the first cloud platform and the second cloud platform are constructed as a cloud federation group. When a user is to access a cloud service across cloud platforms, an alliance management apparatus (for example, the second alliance management apparatus) on the cloud platform may first determine a federal identity credential (that is, an identity credential in the cloud federation group) of the user based on an identity credential of the user on a hosted cloud (for example, the first cloud platform), and then determine an identity credential of the user on a to-be-accessed cloud platform (for example, the second cloud platform) based on the federal identity credential of the user. Based on the identity credential, the cloud service can be accessed across the cloud platforms, thereby implementing procedure collaboration between cloud platforms for a service invocation request submitted by the user when the user accesses a different cloud platform, and improving user experience. In addition, the user does not need to have an account on each of the plurality of cloud platforms, nor needs to transfer an account on one cloud platform to another cloud platform, thereby ensuring information security.

In some possible implementations, the second alliance management apparatus receives a first shared service catalog sent by the first alliance management apparatus. The first shared service catalog includes information about a cloud service shared by the first cloud platform. The information about the cloud service shared by the first cloud platform may include an identifier of the cloud service shared by the first cloud platform, for example, a name and a parameter (an input parameter and/or an output parameter) of the cloud service shared by the first cloud platform. The second alliance management apparatus receives a shared service catalog query request sent by the second operation apparatus, and returns the first shared service catalog to the second operation apparatus, to enable a second user to select a service from the first shared service catalog for access.

In this way, a cloud service can be shared between cloud platforms as required. Because the cloud service does not need to be adaptively encapsulated, a cloud platform can fully use a service capability of another cloud platform in the cloud federation group. This can expand resources and service capabilities of the cloud platforms and implement intensive construction.

In some possible implementations, the first shared service catalog includes one or more of a provisioning range, maximum sharing usage, and a feature limitation of the cloud service shared by the first cloud platform. The provisioning range is a geographical scope in which use is allowed when a cloud resource is allocated to a user or a cloud service instance is provisioned to a user. The geographical scope may include a region (region), an available zone (available zone), and/or a cluster in which use is allowed. For example, a cloud host service on the first cloud platform is allowed to be used in North China, East China, and South China. When the cloud host service is added to the first shared service catalog, a provisioning range may be set to South China. In this way, only a user in South China is allowed to use the cloud host service on the first cloud platform across cloud platforms. The maximum sharing usage is a quota allowed for use in sharing of a cloud service. For example, for the cloud host service, the maximum sharing usage may include one or more of a quota of a processor, a quota of an internal memory, and a quota of a disk. The feature limitation is a constraint on a feature of a cloud service. For example, the feature limitation may be a usage scope of an image or a constraint parameter of a graphics processing unit.

In the method, one or more of the provisioning range, the maximum sharing usage, and the feature limitation of the cloud service in the first shared service catalog are set, so that finer right control can be performed on a user on the second cloud platform during use of the cloud service, thereby meeting a personalized requirement.

In some possible implementations, the second alliance management apparatus may receive a second identity mapping configured by an administrator of the second cloud platform. The second identity mapping includes a mapping relationship between an identity credential of the tenant on the second cloud platform and a federal identity credential of the tenant. The tenant is a common information space opened by a customer (which may be usually an enterprise or a community) to use a capability of a set of services (for example, software as a service). The tenant may include several users, and the users may enter the common information space to use a corresponding capability. In view of this, the mapping relationship between the identity credential of the tenant on the second cloud platform and the federal identity credential of the tenant may be mapping relationships between identity credentials of the several users on the second cloud platform and federal identity credentials of the several users in the tenant. The second alliance management apparatus may convert, based on the second identity mapping, the federal identity credential of the first user in the tenant into the identity credential of the first user on the second cloud platform.

In the method, the second alliance management apparatus performs identity credential conversion by using the second identity mapping relationship. This lays a foundation for the procedure collaboration between cloud platforms for a cloud service.

In some possible implementations, the second alliance management apparatus may send a federal identity credential obtaining request to the first alliance management apparatus. The federal identity credential obtaining request includes the identity credential of the first user on the first cloud platform. Then, the second alliance management apparatus receives the federal identity credential of the first user that is obtained by the first alliance management apparatus through conversion based on a first identity mapping. The first identity mapping includes a mapping relationship between an identity credential of a tenant on the first cloud platform and the federal identity credential of the tenant, and the first user is a user in the tenant.

In this way, the second alliance management apparatus requests the first alliance management apparatus to perform identity credential conversion, to obtain the federal identity credential of the first user, thereby laying a foundation for obtaining the identity credential of the first user on the second cloud platform through conversion based on the federal identity credential.

In some possible implementations, the second alliance management apparatus receives a second cloud federation relationship configured by an administrator of the second cloud platform. The second cloud federation relationship indicates a cloud federation relationship between the first cloud platform and the second cloud platform. In this way, a cloud federation group can be constructed, and identity credentials can be exchanged between different cloud platforms based on the cloud federation group, thereby helping access a cloud service across cloud platforms.

In some possible implementations, the second alliance management apparatus may further receive a first cloud federation relationship that is configured by an administrator of the first cloud platform and that is sent by the first alliance management apparatus. Then, the second alliance management apparatus verifies the first cloud federation relationship and the second cloud federation relationship.

In some possible implementations, the second alliance management apparatus receives a coordination processing request sent by the second operation apparatus. The coordination processing request is generated by the second operation apparatus based on the API invocation request. The second alliance management apparatus sends the coordination processing request to the first alliance management apparatus, and receives a coordination processing result obtained by the first alliance management apparatus from the first operation apparatus. The second alliance management apparatus sends the coordination processing result to the second operation apparatus, to enable the second operation apparatus to generate an API invocation request processing result. The API invocation request processing result is generated based on the coordination processing result.

The coordination processing request may be a pre-coordination processing request and/or a post-coordination processing request. Pre-coordination processing may be coordination processing before the second operation apparatus processes the API invocation request. For example, the pre-coordination processing may include one or more of reviewing the API invocation request, deducting a quota of a related cloud service, processing an/a associated/dependent cloud service, and processing an associated image (for example, loading the associated image). Post-coordination processing may be coordination processing after the second operation apparatus processes the API invocation request. For example, the post-coordination processing may include one or more of adding a tag to a cloud service, classifying a cloud service, performing a compliance check on an obtained cloud service, adding an agent, configuration injection, and association with another information technology system.

In this way, procedure collaboration is performed between different cloud platforms for an API invocation request submitted by a user when the user accesses a different cloud platform, and user experience is improved.

In some possible implementations, the first cloud platform and the second cloud platform are cloud platforms provided by different cloud service providers or different cloud platforms provided by a same cloud service provider. In this way, the service capabilities of the cloud platforms can be expanded and the intensive construction can be implemented.

In some possible implementations, the first cloud platform is any one of a public cloud, a private cloud, or a hybrid cloud, and the second cloud platform is any one of a public cloud, a private cloud, or a hybrid cloud. In this way, cross-platform access can be implemented between a same type of cloud platforms, and can also be implemented between different types of cloud platforms, thereby meeting requirements of different services.

According to a second aspect, this application provides a method for processing a cloud service in a cloud system. The cloud system includes a first cloud platform and a second cloud platform, the first cloud platform and the second cloud platform are allied clouds of each other, a first operation apparatus and a first alliance management apparatus are deployed on the first cloud platform, and a second operation apparatus and a second alliance management apparatus are deployed on the second cloud platform.

Specifically, the second alliance management apparatus receives a first shared service catalog sent by the first alliance management apparatus. The first shared service catalog includes one or more of a provisioning range, maximum sharing usage, and a feature limitation of a cloud service shared by the first cloud platform. The second alliance management apparatus receives a shared service catalog query request sent by the second operation apparatus, and returns the first shared service catalog to the second operation apparatus, to enable a second user to select a service from the first shared service catalog for access.

In the method, one or more of the provisioning range, the maximum sharing usage, and the feature limitation of the cloud service in the first shared service catalog are set, so that finer right control can be performed on a user on the second cloud platform during use of the cloud service, thereby meeting a personalized requirement.

In some possible implementations, the second alliance management apparatus provides a configuration interface. The configuration interface is configured to receive one or more of a provisioning range, maximum sharing usage, and a feature limitation that are of a cloud service shared by the second cloud platform, that are in a second shared service catalog, and that are configured by an administrator of the second cloud platform. The second alliance management apparatus sends the second shared service catalog to the first alliance management apparatus. In this way, fine right control can be performed as required on a cloud service shared by a cloud platform.

According to a third aspect, this application provides a second alliance management apparatus. The second alliance management apparatus and a second operation apparatus are deployed on a second cloud platform in a cloud system, the cloud system further includes a first cloud platform, the first cloud platform and the second cloud platform are allied clouds of each other, and a first operation apparatus and a first alliance management apparatus are deployed on the first cloud platform. The second alliance management apparatus includes:
a communication module, configured to: receive a local identity credential obtaining request sent by the second operation apparatus, where the local identity credential obtaining request is used to request to obtain an identity credential of a first user on the second cloud platform, and the local identity credential obtaining request includes an identity credential of the first user on the first cloud platform; and obtain a federal identity credential of the first user from the first alliance management apparatus based on the identity credential of the first user on the first cloud platform; and
a conversion module, configured to convert the federal identity credential of the first user into the identity credential of the first user on the second cloud platform.

The communication module is further configured to: return, to the second operation apparatus, the identity credential of the first user on the second cloud platform, to enable a client of the first user to obtain the identity credential, returned by the second operation apparatus, of the first user on the second cloud platform, and generate an application programming interface API invocation request based on the identity credential of the first user on the second cloud platform, where the API invocation request is used to invoke a cloud service shared by the second cloud platform.

In some possible implementations, the communication module is further configured to:
receive a first shared service catalog sent by the first alliance management apparatus, where the first shared service catalog includes information about a cloud service shared by the first cloud platform; and
receive a shared service catalog query request sent by the second operation apparatus, and return the first shared service catalog to the second operation apparatus, to enable a second user to select a service from the first shared service catalog for access.

In some possible implementations, the first shared service catalog includes one or more of a provisioning range, maximum sharing usage, and a feature limitation of the cloud service shared by the first cloud platform.

In some possible implementations, the communication module is further configured to:
receive a second identity mapping configured by an administrator of the second cloud platform, where the second identity mapping includes a mapping relationship between an identity credential of a tenant on the second cloud platform and a federal identity credential of the tenant.

The conversion module is specifically configured to:
convert, based on the second identity mapping, the federal identity credential of the first user in the tenant into the identity credential of the first user on the second cloud platform.

In some possible implementations, the communication module is specifically configured to:
send a federal identity credential obtaining request to the first alliance management apparatus, where the federal identity credential obtaining request includes the identity credential of the first user on the first cloud platform; and
receive the federal identity credential of the first user that is obtained by the first alliance management apparatus through conversion based on a first identity mapping, where the first identity mapping includes a mapping relationship between an identity credential of a tenant on the first cloud platform and the federal identity credential of the tenant, and the first user is a user in the tenant.

In some possible implementations, the communication module is further configured to:
receive a second cloud federation relationship configured by an administrator of the second cloud platform, where the second cloud federation relationship indicates a cloud federation relationship between the first cloud platform and the second cloud platform.

In some possible implementations, the communication module is further configured to:
receive a first cloud federation relationship that is configured by an administrator of the first cloud platform and that is sent by the first alliance management apparatus.

The apparatus further includes:
a verification module, specifically configured to verify the first cloud federation relationship and the second cloud federation relationship.

In some possible implementations, the communication module is further configured to:
receive a coordination processing request sent by the second operation apparatus, where the coordination processing request is generated by the second operation apparatus based on the API invocation request;
send the coordination processing request to the first alliance management apparatus, and receive a coordination processing result obtained by the first alliance management apparatus from the first operation apparatus; and
send the coordination processing result to the second operation apparatus, to enable the second operation apparatus to generate an API invocation request processing result, where the API invocation request processing result is generated based on the coordination processing result.

In some possible implementations, the first cloud platform and the second cloud platform are cloud platforms provided by different cloud service providers or different cloud platforms provided by a same cloud service provider.

In some possible implementations, the first cloud platform is a public cloud, a private cloud, or a hybrid cloud, and the second cloud platform is a public cloud, a private cloud, or a hybrid cloud.

According to a fourth aspect, this application provides a computer cluster. The computer cluster includes at least one computer, and the at least one computer includes at least one processor and at least one memory. The at least one processor and the at least one memory communicate with each other. The at least one processor is configured to execute instructions stored in the at least one memory, to enable the computer cluster to perform the method for processing a cloud service in a cloud system according to any one of the implementations of the first aspect or the second aspect.

According to a fifth aspect, this application provides a computer-readable storage medium. The computer-readable storage medium stores instructions. The instructions instruct a computer cluster to perform the method for processing a cloud service in a cloud system according to any one of the implementations of the first aspect or the second aspect.

According to a sixth aspect, this application provides a computer program product including instructions. When the instructions are run on a device, the device is enabled to perform the method for processing a cloud service in a cloud system according to any one of the implementations of the first aspect or the second aspect.

In this application, based on the implementations according to the foregoing aspects, the implementations may be further combined to provide more implementations.

### BRIEF DESCRIPTION OF DRAWINGS

To more clearly describe technical methods in embodiments of this application, the following briefly describes accompanying drawings used in describing embodiments.
FIG. 1 is a diagram of an architecture of a cloud system according to an embodiment of this application;
FIG. 2A and FIG. 2B are a flowchart of establishing a cloud federation group and obtaining an identity credential according to an embodiment of this application;
FIG. 3 is a flowchart of releasing a shared service catalog according to an embodiment of this application;
FIG. 4A and FIG. 4B are a flowchart of service request coordination according to an embodiment of this application;
FIG. 5 is a diagram of a cloud federation group according to an embodiment of this application;
FIG. 6 is a diagram of a structure of a second alliance management apparatus according to an embodiment of this application; and
FIG. 7 is a diagram of a structure of a computer cluster according to an embodiment of this application.

### DESCRIPTION OF EMBODIMENTS

The terms "first" and "second" in embodiments of this application are merely intended for a purpose of description, and shall not be understood as an indication or implication of relative importance or an implicit indication of a quantity of indicated technical features. Therefore, a feature limited by "first" or "second" may explicitly or implicitly include one or more such features.

First, some technical terms in embodiments of this application are described.

Cloud computing is a mode in which an internet technology is used to aggregate enormous and scalable IT capabilities (namely, computing, storage, network, and other resources) to be provided for users as cloud services.

A cloud, also referred to as a cloud platform, is specifically a set of a series of hardware resources and software resources. Generally, one cloud platform has a plurality of regions arranged in various countries/regions. Each region includes at least one data center, and each data center is provided with a hardware resource and a software resource. Different cloud service providers establish different cloud platforms, for example, HUAWEI CLOUD of Huawei and Azure Cloud of Microsoft. Different cloud platforms provide resource (including computing, storage, network, application, and other resources) rental in a form of a cloud service for users.

A size of the cloud platform is dynamically scalable, so that a need of application and user scale growth can be met by aggregating more resources. Cloud computing supports a user in obtaining a cloud service at a plurality of locations by using a plurality of terminals, and a hardware resource and a software resource that support the cloud service are from a cloud platform. Common cloud services include three types: infrastructure as a service (infrastructure as a service, IaaS), platform as a service (platform as a service, PaaS), and software as a service (software as a service, SaaS).

The infrastructure as a service includes a virtual machine computing service, a data storage service, and the like, and mainly provides a resource such as a hardware device for a user as a service in a form of a virtual machine/container, and the user may install and run an application of the user by using a virtual machine or a storage resource provided in the cloud service. The platform as a service mainly enables a developer to construct and deploy application programs of the developer on an infrastructure and an operating environment that are provided by a cloud platform, and allows these application programs to use resources in a cloud infrastructure. The software as a service provides some application programs running on a cloud platform for the user as a service as required, for example, a cloud-based speech-to-text service and a cloud-based face recognition service.

For a hosted cloud (hosted cloud), a cloud platform on which a user is registered is referred to as a hosted cloud of the user. The hosted cloud may directly provide a cloud service for the user. The cloud service directly provided by the hosted cloud for the user is also referred to as a local cloud service of the hosted cloud. The hosted cloud may be a public cloud, a private cloud, a hybrid cloud, or the like.

A cloud federation group is a group established by a plurality of independent cloud platforms. The cloud platforms in the cloud federation group have a cloud federation relationship with each other. The cloud federation relationship is specifically a relationship of jointly providing a cloud service. For example, a cloud platform A and a cloud platform B form a cloud federation group. The cloud platform A may share cloud services 1 to m, and the cloud platform B may share cloud services m+1 to n. In this case, a user of the cloud platform A may access a local cloud service on the cloud platform A and a cloud service (for example, the cloud services m+1 to n) shared by the cloud platform B, a user of the cloud platform B may access a local cloud service of the cloud platform B and a cloud service (for example, the cloud services 1 to m) shared by the cloud platform A, where m and n are positive integers.

An allied cloud (allied cloud) is a cloud platform that is in a cloud federation group and that has a cloud federation relationship with a hosted cloud. In this application, cloud platforms in a cloud federation group may be allied clouds of each other. For example, when forming the cloud federation group, the cloud platform A and the cloud platform B are allied clouds of each other. The allied cloud may be a public cloud, a private cloud, a hybrid cloud, or the like.

In a complex multi-cloud environment, different cloud platforms are independent of each other and are associated with each other. It is common for a user on a cloud platform to use resources of a plurality of cloud platforms based on a service application requirement. However, it is difficult to perform procedure collaboration between cloud platforms for a service invocation request submitted by the user when the user accesses a different cloud platform, thereby affecting user experience.

The following describes a multi-cloud architecture. For example, the multi-cloud architecture includes a cloud platform A and a cloud platform B. The cloud platform A and the cloud platform B are two clouds that are independently operated. The cloud platform A provides a cloud service adaptation layer that is open to the cloud platform B, and encapsulates service capabilities of the cloud platform B and then provides all encapsulated service capabilities for users to use. After logging in to the cloud platform A, a user may use a service of the cloud platform B by using the cloud platform A as an agent.

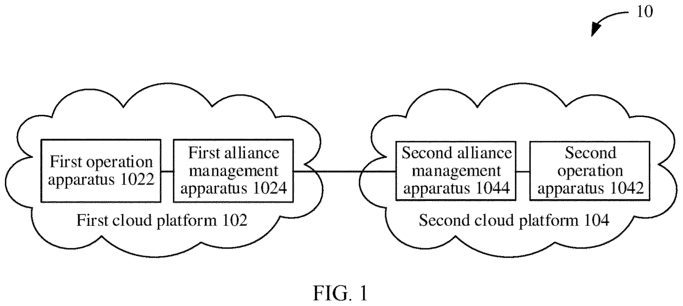

In view of this, embodiments of this application provide a method for processing a cloud service in a cloud system. Refer to a diagram of an architecture of a cloud system shown in FIG. 1. A cloud system 10 includes a plurality of cloud platforms (namely, clouds described above), and the plurality of cloud platforms are allied clouds of each other. An example in which the cloud system 10 includes a first cloud platform 102 and a second cloud platform 104 is shown in FIG. 1 for description. A first operation apparatus 1022 and a first alliance management apparatus 1024 are deployed on the first cloud platform 102, and a second operation apparatus 1042 and a second alliance management apparatus 1044 are deployed on the second cloud platform 104. A communication connection is established between the first alliance management apparatus 1024 and the second alliance management apparatus 1044.

The first operation apparatus 1022 and the second operation apparatus 1042 are apparatuses for managing use of the clouds. Specifically, the operation apparatus may manage a tenant on the cloud, a service catalog of the cloud platform, or a service invocation request. The tenant is a common information space opened by a customer (which may be usually an enterprise or a community) to use a capability of a set of SaaS. The tenant may include several users, and the users may enter the common information space to use a corresponding capability.

The first alliance management apparatus 1024 and the second alliance management apparatus 1044 are apparatuses for implementing a cloud federation group. Specifically, the alliance management apparatus may also be referred to as a cloud federation agent, for example, a cloud federation agent of the first cloud platform or a cloud federation agent of the second cloud platform. The alliance management apparatus (for example, the first alliance management apparatus 1024 or the second alliance management apparatus 1044) may interact with the operation apparatus (for example, the first operation apparatus 1022 or the second operation apparatus 1042) for data exchange, to process a cloud service, so that procedure collaboration can be performed between cloud platforms for a service invocation request submitted by a user when the user accesses a different cloud platform.

Different from the multi-cloud architecture, a cloud federation group including the first cloud platform 102 and the second cloud platform 104 in this embodiment of this application is a peer-to-peer cloud federation group. A cloud federation relationship between cloud platforms, for example, the first cloud platform 102 and the second cloud platform 104, in the cloud federation group is a peer-to-peer cloud federation relationship. Any cloud platform in the cloud federation group may share a cloud service with a user on another cloud platform, which is not limited to a specific cloud platform. For example, the first cloud platform 102 may share a cloud service with a user (for example, a second user) of the second cloud platform 104, and the second cloud platform 104 may share a cloud service with a user (for example, a first user) of the first cloud platform. In addition, the cloud platform in the cloud federation group does not need to encapsulate a service capability of another cloud platform, and can fully use the service capability of the another cloud platform.

It should be noted that the first operation apparatus 1022 and the second operation apparatus 1042 may be software apparatuses or hardware apparatuses. This not limited in embodiments. Similar to the first operation apparatus 1022 and the second operation apparatus 1042, the first alliance management apparatus 1024 and the second alliance management apparatus 1044 may be software apparatuses or hardware apparatuses. For ease of description, in embodiments of this application, an example in which the apparatuses are software apparatuses is used for description.

The first alliance management apparatus 1024 may be an independent apparatus, or may be an apparatus integrated on the first operation apparatus 1022, for example, may be a plug-in or a functional module of the first operation apparatus 1022. Similarly, the second alliance management apparatus 1044 may be an independent apparatus, or may be an apparatus integrated on the second operation apparatus 1042, for example, may be a plug-in or a functional module of the second operation apparatus 1042. Further, the first operation apparatus 1022 or the second operation apparatus 1042 may alternatively be a part of a cloud management system or a cloud platform, which means that an independent operation apparatus may be not necessary.

In addition, FIG. 1 merely shows an example in which the cloud system 10 includes the first cloud platform 102 and the second cloud platform 104 for description. In some possible implementations, the cloud system 10 may further include more cloud platforms. For example, the cloud system 10 may further include a third cloud platform. The peer-to-peer cloud federation relationship may be established between each two of a plurality of independent cloud platforms, not limited to two clouds. One cloud may establish a peer-to-peer cloud federation relationship with a plurality of clouds, so that the plurality of clouds can be connected to each other.

A key to procedure collaboration between cloud platforms for a service invocation request submitted by a user when the user accesses a different cloud platform (for example, an allied cloud) is to establish a cloud federation group, and obtain an identity credential of the user on the allied cloud based on a federal identity credential of the user in the cloud federation group, to access the allied cloud by using the identity credential of the user on the allied cloud.

The identity credential may be a credential representing an identity of the user, and the credential can be processed by the cloud platform, to correctly control various types of rights of the user on the corresponding cloud platform. The identity credential may be classified into a local identity credential and a federal identity credential. The local identity credential may be an identity credential on a specific cloud platform, and the federal identity credential is an identity credential that is pre-agreed and that can be identified by each cloud platform.

The identity credential usually carries identity information. The identity information may include an identifier of the user and a role type of the user. The identifier of the user may be an account of the user on a hosted cloud and/or a user name of the user on the hosted cloud. The account and the user name are unique on the hosted cloud. The role type of the user may be set as required. For example, the role type of the user may include different types: a tenant administrator, a common user, a customer, and a supplier. In some possible implementations, the identity information may further include an identifier of the hosted cloud on which the user is located. The identifier of the hosted cloud is unique in the cloud federation group. The identity credential may be in a form of a character string or an identification code (for example, a bar code or a two-dimensional code). For example, the identity credential may be a character string obtained by splicing information such as the identifier of the user and the role type of the user.

Further, to facilitate use of cloud services shared by different cloud platforms for the user, a shared service catalog may be further released between cloud platforms in the cloud federation group. Each cloud platform may release one shared service catalog in one cloud federation group. A type of a cloud service and a quantity of cloud services included in the shared service catalog are not limited.

A cloud federation user identity exchange protocol may be used to establish the cloud federation group, and obtain the identity credential of the user on the allied cloud based on the federal identity credential of the user in the cloud federation group. The cloud platform in the cloud federation group may release the shared service catalog by using a cloud federation service catalog sharing protocol. The service invocation request submitted by the user when the user accesses a different cloud platform may be transferred between cloud platforms by using a cloud federation service request coordination protocol.

To make technical solutions of this application clearer and easier to understand, the following separately describes in detail procedures corresponding to the foregoing three cloud federation protocols.

First, the cloud federation user identity exchange protocol is used to exchange and determine an identity credential of a user between a plurality of cloud platforms. The cloud system 10 shown in FIG. 1 is still used as an example for description. An administrator of the first cloud platform 102 and an administrator of the second cloud platform 104 respectively configure cloud federation relationships and identity mappings by using respective alliance management apparatuses such as the first alliance management apparatus 1024 and the second alliance management apparatus 1044. Then, after logging in to a hosted cloud, a user may access an allied cloud by using an identity credential on the hosted cloud. The following uses an example in which the first user logs in to the first cloud platform 102, obtains an identity credential of the first user on the first cloud platform 102, and accesses the second cloud platform 104 by using the identity credential of the first user on the first cloud platform 102 for description.

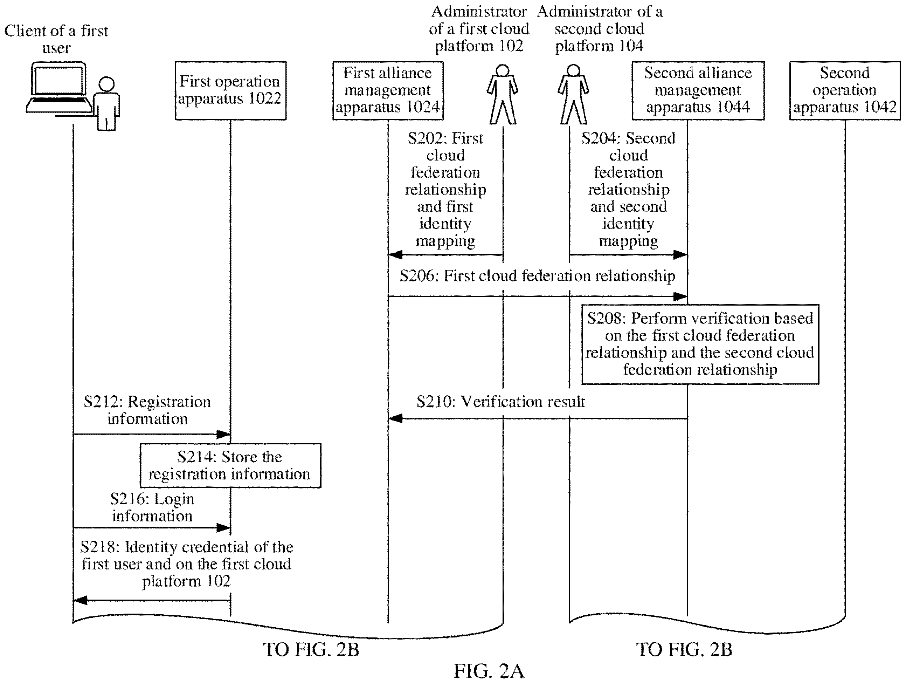

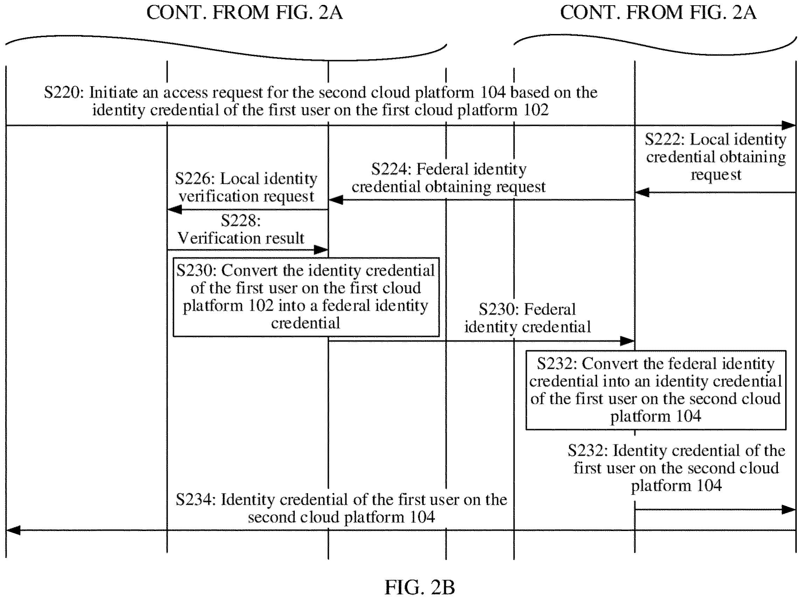

Refer to a flowchart, shown in FIG. 2A and FIG. 2B, of establishing a cloud federation group and obtaining an identity credential. The method includes the following steps.

S202: The first alliance management apparatus 1024 receives a first cloud federation relationship and a first identity mapping that are configured by the administrator of the first cloud platform 102.

A cloud federation relationship configured by the administrator of the first cloud platform 102 through the first alliance management apparatus 1024 is referred to as the first cloud federation relationship, and an identity mapping configured by the administrator of the first cloud platform 102 through the first alliance management apparatus 1024 is referred to as the first identity mapping.

The first cloud federation relationship indicates a cloud federation relationship between the first cloud platform 102 and another cloud platform (for example, the second cloud platform 104) that is in a same cloud federation group as the first cloud platform 102. In view of this, the first cloud federation relationship may carry an identifier of the first cloud platform 102 and an identifier of the another cloud platform (for example, the second cloud platform 104) that is in the same cloud federation group as the first cloud platform 102.

The first identity mapping indicates a mapping relationship between an identity credential of a tenant on the first cloud platform 102 and a federal identity credential of the tenant. The identity credential represents an identity of a user/tenant, and can be processed by a cloud platform, to correctly control various types of rights of the user/tenant on the corresponding cloud platform. Considering that the tenant may include a plurality of users, the first identity mapping may indicate mapping relationships between identity credentials of different role types of users in the tenant on the first cloud platform 102 and federal identity credentials of the users. The role type may be set as required. For example, the role type may include a tenant administrator, a common user, a customer, and a supplier. The role type may be further subdivided. For example, the common user may include a sales manager, a sales director, and a sales specialist.

The identity credential may include different types such as a local identity credential and a federal identity credential. The local identity credential is an identity credential of the user/tenant on a hosted cloud. For example, the identity credential of the first user on the first cloud platform 102 is a local identity credential of the first user. The federal identity credential is a public identity credential that is agreed on by an administrator of each cloud platform in a cloud federation group. The public identity credential may be, for example, a public identifier. The public identifier may be in a form of a character string or an identification code (for example, a bar code or a two-dimensional code). When the first user accesses a non-hosted cloud (for example, the second cloud platform 104) in a same cloud federation group, the accessed cloud platform may identify the first user by using the federal identity credential, and grant a correct access right to the first user.

S204: The second alliance management apparatus 1044 receives a second cloud federation relationship and a second identity mapping that are configured by the administrator of the second cloud platform 104.

A cloud federation relationship configured by the administrator of the second cloud platform 104 through the second alliance management apparatus 1044 is referred to as the second cloud federation relationship, and an identity mapping configured by the administrator of the second cloud platform 104 through the second alliance management apparatus 1044 is referred to as the second identity mapping.

The second cloud federation relationship indicates a cloud federation relationship between the second cloud platform 104 and another cloud platform (for example, the first cloud platform 102) that is in a same cloud federation group as the second cloud platform 104. In view of this, the second cloud federation relationship may carry an identifier of the second cloud platform 104 and an identifier of the another cloud platform (for example, the first cloud platform 102) that is in the same cloud federation group as the second cloud platform 104.

The second identity mapping indicates a mapping relationship between an identity credential of a tenant on the second cloud platform 104 and a federal identity credential of the tenant. The identity credential represents an identity of a user/tenant, and can be processed by a cloud platform, to correctly control various types of rights of the user/tenant on the corresponding cloud platform. The tenant may include a plurality of users. In view of this, the second identity mapping may indicate mapping relationships between identity credentials of different role types of users in the tenant on the second cloud platform 104 and federal identity credentials of the users.

S202 and S204 may be performed in parallel, or may be performed in a specified sequence. This is not limited in this embodiment.

S206: The first alliance management apparatus 1024 sends the first cloud federation relationship to the second alliance management apparatus 1044.

S208: The second alliance management apparatus 1044 performs verification based on the first cloud federation relationship and the second cloud federation relationship.

S210: The second alliance management apparatus 1044 returns a verification result to the first alliance management apparatus 1024.

The second alliance management apparatus 1044 may perform consistency verification on the first cloud federation relationship and the second cloud federation relationship, to avoid an error in establishing a cloud federation group. For example, the second alliance management apparatus 1044 may compare identifiers of cloud platforms carried in the first cloud federation relationship with identifiers of the cloud platforms carried in the second cloud federation relationship, to determine whether members that are in the cloud federation group and that are configured by the administrator of the first cloud platform 102 are the same as members that are in the cloud federation group and that are configured by the administrator of the second cloud platform 104.

If the identifiers of the cloud platforms carried in the first cloud federation relationship are consistent with the identifiers of the cloud platforms carried in the second cloud federation relationship, it indicates that the consistency verification succeeds, and the members that are in the cloud federation group and that are configured by the administrator of the first cloud platform 102 are the same as the members that are in the cloud federation group and that are configured by the administrator of the second cloud platform 104. Correspondingly, the verification result may be a verification success, and the user may perform a subsequent procedure.

If the identifiers of the cloud platforms carried in the first cloud federation relationship are inconsistent with the identifiers of the cloud platforms carried in the second cloud federation relationship, it indicates that the consistency verification fails, and the members that are in the cloud federation group and that are configured by the administrator of the first cloud platform 102 are different from the members that are in the cloud federation group and that are configured by the administrator of the second cloud platform 104. Correspondingly, the verification result may be a verification failure. The administrator of the first cloud platform 102 and/or the administrator of the second cloud platform 104 may re-configure the cloud federation relationship.

It should be noted that S206 to S210 may not be performed in the method in this embodiment of this application. For example, the second alliance management apparatus 1044 may send the second cloud federation relationship to the first alliance management apparatus 1024, and the first alliance management apparatus 1024 performs consistency verification based on the first cloud federation relationship and the second cloud federation relationship. In some embodiments, the first cloud platform 102 and the second cloud platform 104 may alternatively ensure consistency between the first cloud federation relationship and the second cloud federation relationship in another manner. For example, the administrator of the first cloud platform 102 and the administrator of the second cloud platform 104 may enter respective cloud federation relationships in a copy manner.

S212: A client of the first user sends registration information to the first operation apparatus 1022.

The registration information may specifically include a user name and a password. The user name may be a user name manually configured by the first user, or may be a user name automatically generated by the client. In some possible implementations, the registration information may further include a verification parameter and a verification code. The verification parameter may be, for example, a phone number or an email address for verification.

S214: The first operation apparatus 1022 stores the registration information.

The first operation apparatus 1022 may maintain a user information base. The user information base is used to store related information of the user. Specifically, the first operation apparatus 1022 may store the registration information into the user information base for use during login verification.

It should be noted that when the first cloud platform 102 is a public cloud, the client of the first user may send the registration information to the first operation apparatus 1022. In some embodiments, S212 and S214 may not be performed in the method in this embodiment of this application. For example, when the first cloud platform 102 is a private cloud, the administrator of the first cloud platform 102 may directly create a tenant and a user. Further, the administrator of the first cloud platform 102 may further assign a corresponding role type to the user.

S216: The client of the first user sends login information to the first operation apparatus 1022. When login verification succeeds, S218 is performed.

The login information may include information for the login verification. In some embodiments, the login information may include the user name and the password, or an account and the password. In some other embodiments, the login information may alternatively include the user name and a verification code. The verification code may be a verification code received through a phone or an email.

The first operation apparatus 1022 may compare the login information with information (for example, the registration information) that is about the first user and that is stored in the user information base, to perform login verification on the first user. When the login information is consistent with the information that is about the first user and that is stored in the user information base, the first operation apparatus 1022 determines that the login verification succeeds. When the login information is inconsistent with the information that is about the first user and that is stored in the user information base, the first operation apparatus 1022 determines that the login verification fails.

S218: The first operation apparatus 1022 returns, to the client of the first user, the identity credential of the first user on the first cloud platform 102.

The identity credential of the first user on the first cloud platform 102 is a credential used to prove a real identity of the first user, and may be usually generated based on a login password or an access key (AccessKey). Specifically, when the login verification succeeds, the first operation apparatus 1022 may generate, based on the login password or the access key in the login information, the identity credential of the first user on the first cloud platform 102.

The first operation apparatus 1022 may generate, based on information such as the login password and/or the access key according to an identity credential generation algorithm or rule, the identity credential of the first user on the first cloud platform 102. In some embodiments, the identity credential generation algorithm may be a hash algorithm. Considering security, the first operation apparatus 1022 may further add information such as a random number or time to the identity credential, to ensure security of the identity credential. For ease of use, the identity credential may be represented by using a character string or an identification code. The identification code may be a bar code or a two-dimensional code.

It should be noted that when the client of the first user stores the identity credential of the first user on the first cloud platform 102, the first operation apparatus 1022 may not perform S218. For example, after the first user logs in for the first time, when the identity credential, buffered by the client of the first user, of the first user on the first cloud platform 102 is not deleted, the first operation apparatus 1022 may not perform S218.

S220: The client of the first user initiates an access request for the second cloud platform 104 based on the identity credential of the first user on the first cloud platform 102.

The client of the first user may generate an access request based on the identity credential of the first user on the first cloud platform 102. The access request is used to request to access the second cloud platform 104. The access request carries the identity credential of the first user on the first cloud platform 102.

S222: The second operation apparatus 1042 generates a local identity credential obtaining request based on the access request for the second cloud platform 104, and sends the local identity credential obtaining request to the second alliance management apparatus 1044.

Specifically, the local identity credential obtaining request is used to request an identity credential of the first user on the second cloud platform 104. The local identity credential obtaining request carries the identity credential of the first user on the first cloud platform 102, so that the first cloud platform 102 identifies the first user based on the identity credential of the first user on the first cloud platform 102, and returns a federal identity credential of the first user. Then, the second cloud platform 104 obtains, based on the federal identity credential of the first user, an identity credential of the first user on the second cloud platform 104.

S224: The second alliance management apparatus 1044 sends a federal identity credential obtaining request to the first alliance management apparatus 1024.

The second alliance management apparatus 1044 stores the mapping relationships between the identity credentials of users in the tenant on the second cloud platform 104 and the federal identity credentials of the users. To obtain the identity credential of the first user on the second cloud platform 104, the second alliance management apparatus 1044 may generate a federal identity credential obtaining request, and send the federal identity credential obtaining request to the first alliance management apparatus 1024. The federal identity credential obtaining request includes the identity credential of the first user on the first cloud platform 102, so that the first alliance management apparatus 1024 determines the federal identity credential of the first user based on the identity credential of the first user on the first cloud platform 102.

S226: The first alliance management apparatus 1024 sends a local identity verification request to the first operation apparatus 1022.

S228: The first operation apparatus 1022 performs verification on a local identity credential in the local identity verification request, and returns a verification result. When the verification result represents a verification success, S230 is performed.

Optionally, the first alliance management apparatus 1024 may request the first operation apparatus 1022 to perform verification on a local identity credential of the first user in the federal identity credential obtaining request. The first operation apparatus 1022 may compare an identity credential of the first user generated through login with the local identity credential of the first user in the federal identity credential obtaining request, to implement identity verification. The first operation apparatus 1022 performs S230 after the verification succeeds.

S230: The first alliance management apparatus 1024 converts the identity credential of the first user on the first cloud platform 102 into the federal identity credential of the first user, and returns the federal identity credential of the first user to the second alliance management apparatus 1044.

The first alliance management apparatus 1024 may search for, based on the identity credential of the first user on the first cloud platform 102, a mapping relationship between the identity credential of a user in the tenant on the first cloud platform 102 and the federal identity credential of the user, and convert, based on the mapping relationship, the identity credential of the first user on the first cloud platform 102 into the federal identity credential of the first user.

S232: The second alliance management apparatus 1044 converts the federal identity credential of the first user into the identity credential of the first user on the second cloud platform 104, and returns, to the second operation apparatus 1042, the identity credential of the first user on the second cloud platform 104.

The second alliance management apparatus 1044 may convert, based on a pre-defined mapping relationship, the federal identity credential of the first user into the identity credential of the first user on the second cloud platform 104. In some embodiments, the first user may be considered as a federal user of the second cloud platform 104. Correspondingly, the identity credential of the first user on the second cloud platform 104 may be a temporary identity credential. In this way, resource consumption caused by long-term maintenance of the identity credential of the first user on the second cloud platform 104 can be avoided.

S234: The second operation apparatus 1042 returns, to the client of the first user, the identity credential of the first user on the second cloud platform 104.

It should be noted that S230 to S234 may not be performed in the method in this embodiment of this application. For example, when the client of the first user stores the identity credential of the first user on the second cloud platform 104, S230 to S234 may not be performed.

The embodiment shown in FIG. 2A and FIG. 2B is described by using an example in which the first user accesses the second cloud platform 104 based on the identity credential of the first user on the first cloud platform 102. In some possible implementations, the second user may also access the first cloud platform 102 based on an identity credential of the second user on the second cloud platform 104. For a specific implementation, refer to access of the first user to the second cloud platform 104. This is not limited in embodiments.

In the method, cloud platforms (for example, the first cloud platform 102 and the second cloud platform 104) in the cloud system 10 establish a cloud federation group, and each cloud platform in the cloud federation group maintains a mapping relationship between an identity credential of a user on the cloud platform and a federal identity credential of the user through a respective alliance management apparatus (for example, the first alliance management apparatus 1024 or the second alliance management apparatus 1044). When a client of the user uses an identity credential on a hosted cloud (a cloud platform on which the user is registered) to access an allied cloud (a cloud platform other than the hosted cloud in the cloud federation group), an alliance management apparatus of the hosted cloud may convert the identity credential on the hosted cloud into a federal identity credential based on a mapping relationship stored on the hosted cloud, and then an alliance management apparatus of the allied cloud may convert the federal identity credential into an identity credential on the allied cloud based on a mapping relationship stored on the allied cloud. Based on the identity credential on the allied cloud, a cloud service shared by the allied cloud can be invoked, thereby meeting a service requirement. In addition, in the method, the user does not need to have accounts on a plurality of cloud platform, nor needs to provide an account on the allied cloud to the hosted cloud, thereby reducing a risk of account leakage and ensuring account security.

Next, the cloud federation service catalog sharing protocol is used to release a shared service catalog to each other between a plurality of cloud platforms in a cloud federation group. The shared service catalog is a catalog of a shared cloud service. The shared cloud service includes one or more of a cloud host service (also referred to as an elastic compute service (elastic compute service, ECS)), an elastic volume service (elastic volume service, EVS), a relational database service (relational database service, RDS), a container service (also referred to as a cloud container engine (cloud container engine, CCE)), and an object storage service (object storage service, OBS). Specifically, an administrator of a cloud platform may configure a shared service catalog of the cloud platform, and release the shared service catalog to another cloud platform in the cloud federation group. The following uses an example in which the first cloud platform 102 releases a first shared service catalog for description.

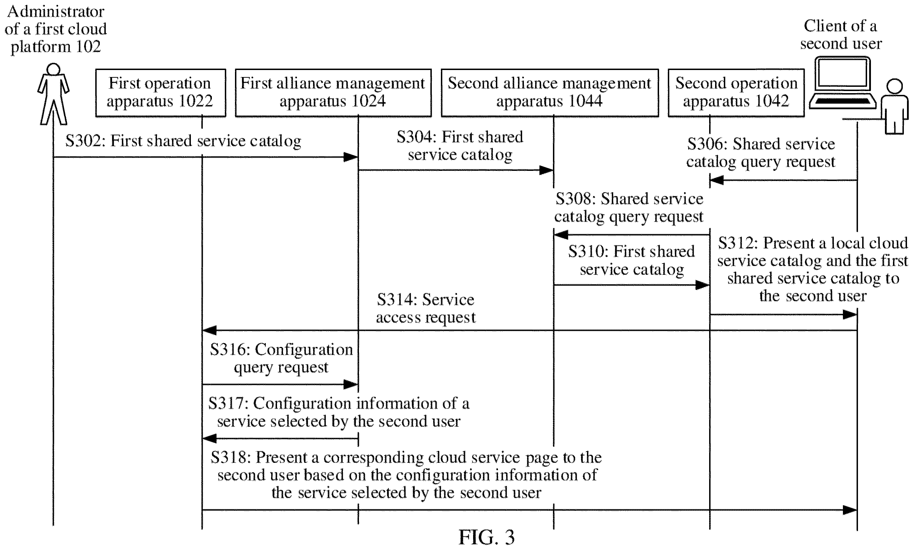

Refer to a flowchart, shown in FIG. 3, of releasing a shared service catalog. The method includes the following steps.

S302: The administrator of the first cloud platform 102 configures the first shared service catalog through the first alliance management apparatus 1024.

The first shared service catalog is a catalog of a cloud service shared by the first cloud platform 102. The first shared service catalog includes information about the cloud service shared by the first cloud platform 102. The information about the cloud service shared by the first cloud platform 102 includes an identifier of the cloud service shared by the first cloud platform 102, for example, may be an API name of the cloud service. Further, the information about the cloud service shared by the first cloud platform 102 further includes an input parameter and/or an output parameter of the cloud service.

In some possible implementations, the first shared service catalog includes one or more of a provisioning range, maximum sharing usage, and a feature limitation of the cloud service shared by the first cloud platform 102. The maximum sharing usage may include maximum usage of a virtual processing unit (virtual central processing unit, vCPU) in sharing and/or maximum usage of storage in sharing. The feature limitation may be, for example, a usage scope of an image or a constraint parameter of a graphics processing unit (graphical processing unit, GPU). In this way, finer right control can be performed on a user on the second cloud platform 104.

Similar to subdivision control of a local cloud service catalog, the provisioning range and the maximum sharing usage that are of the shared cloud service may be set based on an identity credential of a user. The provisioning range is a geographical scope in which use is allowed when a cloud resource is allocated to the user or a cloud service instance is provisioned to the user. The geographical scope may include a region (region), an available zone (available zone), and/or a cluster in which use is allowed. For example, an ECS on the first cloud platform 102 is allowed to be used in North China, East China, and South China. When the ECS is added to the first shared service catalog, a provisioning range may be set to South China. In this way, only a user in South China is allowed to use the ECS on the first cloud platform 102 across the cloud platforms. The maximum sharing usage is a quota allowed for use in sharing of a cloud service. For example, for the ECS, the maximum sharing usage may include one or more of a quota of the vCPU, a quota of an internal memory, and a quota of a disk.

S304: The first alliance management apparatus 1024 sends the first shared service catalog to the second alliance management apparatus 1044.

S306: A client of the second user may generate a shared service catalog query request, and send the shared service catalog query request to the second operation apparatus 1042.

The client of the second user may first send login information of the second user, to log in to the second operation apparatus 1042. When login verification succeeds, a shared service catalog query request is generated, and is sent to the second operation apparatus 1042.

S308: The second operation apparatus 1042 sends the shared service catalog query request to the second alliance management apparatus 1044.

S310: The second alliance management apparatus 1044 returns the first shared service catalog to the second operation apparatus 1042.

It should be noted that when a cloud federation group includes another allied cloud other than the first cloud platform 102, the second alliance management apparatus 1044 may return a set including the first shared service catalog, and the set includes a shared service catalog of the another allied cloud.

S312: The second alliance management apparatus 1044 presents the local cloud service catalog and the first shared service catalog to the second user.

The local cloud service catalog is a catalog of a cloud service directly provided by the second cloud platform 104. The first shared service catalog is the catalog of the cloud service shared by the first cloud platform 102.

S314: The client of the second user sends a service access request to the first operation apparatus 1022.

Specifically, the second user may select a service from the first shared service catalog, and the client of the second user generates a service access request based on the service selected by the second user. The service access request is used to request to access the service that is in the cloud service shared by the first cloud platform 102 and that is selected by the second user.

S316: The first operation apparatus 1022 sends a configuration query request to the first alliance management apparatus 1024.

S317: The first alliance management apparatus 1024 returns configuration information to the first operation apparatus 1022.

The configuration query request indicates to query for configuration information of the service selected by the second user. The configuration information may be an address of the service or other information. The configuration query request includes an identifier of the service selected by the second user. The identifier of the service may be a name of the service, for example, an API name.

After receiving the configuration query request, the first alliance management apparatus 1024 may search for the configuration information of the service based on the identifier of the service in the configuration query request, and then return the configuration information to the first operation apparatus 1022.

S318: The first operation apparatus 1022 presents a corresponding cloud service page to the second user based on the configuration information of the service selected by the second user.

The cloud service page may be a page for subscribing to the cloud service. In some embodiments, for example, a cloud service is a subscribed cloud service, and when the cloud service needs to be scaled out or scaled in, a cloud service page may alternatively be a cloud service change page or deletion page.

In this embodiment, operation apparatuses, for example, the first operation apparatus 1022 and the second operation apparatus 1042, of a plurality of cloud platforms may be integrated into a cloud federation operation apparatus, and correspondingly, shared service catalogs of the plurality of cloud platforms may also be integrated for management together. For example, when the plurality of cloud platforms are cloud platforms of different organizations in a community, the operation apparatuses of the plurality of cloud platforms may be integrated into one cloud federation operation apparatus.

It should be noted that the first cloud platform 102 and the second cloud platform 104 each may be a public cloud, a private cloud, or a hybrid cloud. According to the method in this embodiment, a cloud service provided by a public cloud may be shared with a private cloud as required, and a cloud service provided by the private cloud may also be shared with the public cloud as required, thereby implementing external sales and realization of the service provided by the private cloud.

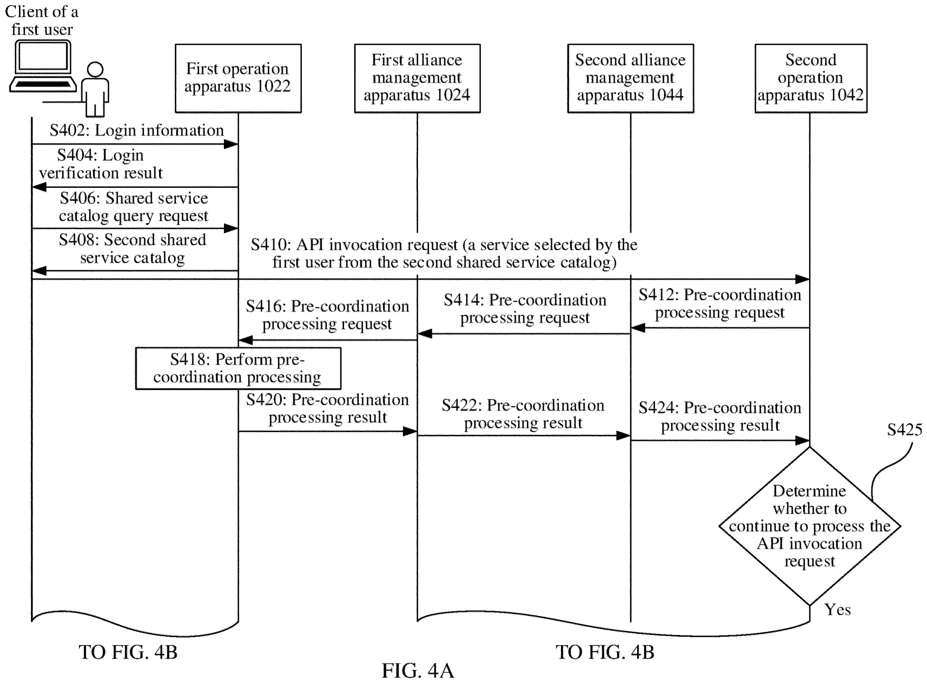

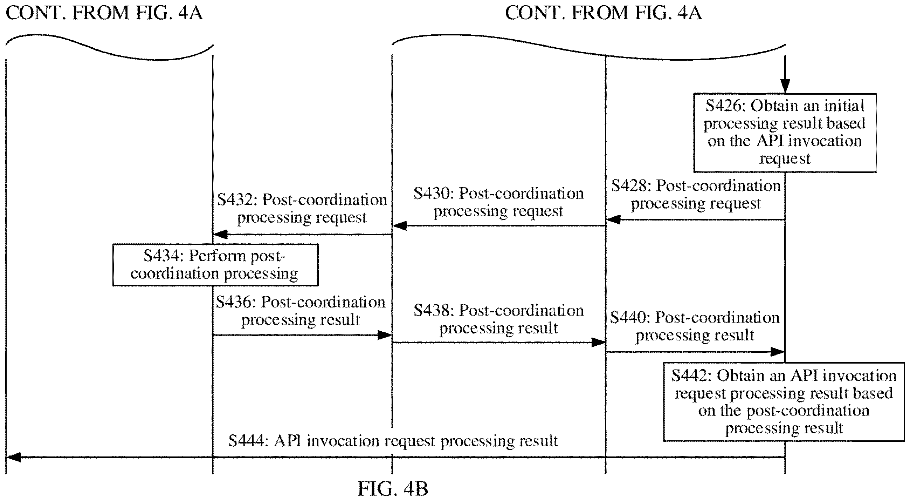

Then, the cloud federation service request coordination protocol is used to perform service request coordination between different cloud platforms. Refer to a flowchart of service request coordination shown in FIG. 4A and FIG. 4B. The method includes the following steps.

S402: The client of the first user sends login information to the first operation apparatus 1022.

S404: The first operation apparatus 1022 returns a login verification result to the client of the first user. When a login verification result is a login verification success, S406 is performed.

It should be noted that S402 and S404 may not be performed in the method in this embodiment of this application.

S406: The client of the first user sends a shared service catalog query request to the first operation apparatus 1022.

S408: The first operation apparatus 1022 returns a second shared service catalog to the client of the first user.

The second shared service catalog is a catalog of a cloud service shared by the second cloud platform 104. For a process in which the first operation apparatus 1022 queries the second shared service catalog, refer to the process in which the second operation apparatus 1042 queries the first shared service catalog in the embodiment shown in FIG. 3. Details are not described herein again in this embodiment.

S410: The client of the first user sends an API invocation request to the second operation apparatus 1042.

Specifically, the first user may select a service from the second shared service catalog, generate an API invocation request based on configuration information of the selected service, and send the API invocation request to the second operation apparatus. For a process of obtaining the configuration information of the service selected by the first user, refer to the process of obtaining the configuration information of the service selected by the second user in the embodiment shown in FIG. 3. Details are not described herein again.

S412: The second operation apparatus 1042 generates a pre-coordination processing request based on the API invocation request, and sends the pre-coordination processing request to the second alliance management apparatus 1044.

S414: The second alliance management apparatus 1044 sends the pre-coordination processing request to the first alliance management apparatus 1024.

S416: The first alliance management apparatus 1024 sends the pre-coordination processing request to the first operation apparatus 1022.

S418: The first operation apparatus 1022 performs pre-coordination processing based on the pre-coordination processing request.

The pre-coordination processing may also be referred to as first coordination processing. The pre-coordination processing is specifically performed to prepare for API invocation. In view of this, the pre-coordination processing may include one or more of the following processing: (1) reviewing the API invocation request; (2) deducting a quota of a related cloud service; (3) processing an/a associated/dependent cloud service; and (4) processing an associated image (for example, loading the associated image).

S420: The first operation apparatus 1022 returns a pre-coordination processing result to the first alliance management apparatus 1024.

The pre-coordination processing result may vary with different processing included in the pre-coordination processing. For example, if the pre-coordination processing includes processing an associated image, the pre-coordination processing result may include the associated image.

S422: The first alliance management apparatus 1024 returns the pre-coordination processing result to the second alliance management apparatus 1044.

S424: The second alliance management apparatus 1044 returns the pre-coordination processing result to the second operation apparatus 1042.

S425: The second operation apparatus 1042 determines, based on the pre-coordination processing result, whether to continue to process the API invocation request.

When the pre-coordination processing includes reviewing the API invocation request, the pre-coordination processing result may include a review result of the API invocation request. When the review result is a review success, the second operation apparatus 1042 may perform a subsequent step, to continue to process the API invocation request. When the review result is a review failure, the second operation apparatus 1042 may not perform a subsequent step, to stop processing the API invocation request.

It should be noted that the pre-coordination processing (for example, S412 to S425) may be optionally performed based on a pre-configuration. This is not limited in this embodiment.

S426: The second operation apparatus 1042 performs processing based on the API invocation request, to obtain an initial processing result.

The initial processing result may vary with different API invocation requests. For ease of understanding, descriptions are made below with reference to a specific example. In the example, the API invocation request is used to request to create a cloud host, and the initial processing result may be a cloud host created based on an image obtained from the first operation apparatus 1022.

S428: The second operation apparatus 1042 generates a post-coordination processing request based on the API invocation request, and sends the post-coordination processing request to the second alliance management apparatus 1044.

S430: The second alliance management apparatus 1044 sends the post-coordination processing request to the first alliance management apparatus 1024.

S432: The first alliance management apparatus 1024 sends the post-coordination processing request to the first operation apparatus 1022.

S434: The first operation apparatus 1022 performs post-coordination processing based on the post-coordination processing request.

The post-coordination processing may also be referred to as second coordination processing. The second coordination processing is performed for post-processing. The post-coordination processing may include one or more of the following processing: (1) adding a tag to a cloud service, for example, adding a purpose tag or a department tag; (2) classifying a cloud service, for example, performing classification by attributes based on a configuration management database (Configuration Management Database, CMDB); (3) performing a compliance check on an obtained cloud resource; (4) adding an agent, for example, a log collection agent; (5) configuration injection; and (6) association with another information technology system, for example, association with an asset management system.

S436: The first operation apparatus 1022 returns a post-coordination processing result to the first alliance management apparatus 1024.

S438: The first alliance management apparatus 1024 returns the post-coordination processing result to the second alliance management apparatus 1044.

S440: The second alliance management apparatus 1044 returns the post-coordination processing result to the second operation apparatus 1042.

It should be noted that the post-coordination processing may be optionally performed based on a pre-configuration. This is not limited in this embodiment.

S442: The second operation apparatus 1042 obtains an API invocation request processing result based on the post-coordination processing result.

It should be noted that when the first operation apparatus 1022 does not perform the pre-coordination processing, nor performs the post-coordination processing, the second operation apparatus 1042 may directly determine the initial processing result as the API invocation request processing result. When the first operation apparatus 1022 performs the post-coordination processing, the second operation apparatus 1042 may determine the API invocation request processing result based on the post-coordination processing result. When the first operation apparatus 1022 performs the pre-coordination processing and does not perform the post-coordination processing, the second operation apparatus 1042 may obtain the API invocation request processing result based on the initial processing result.

S444: The second operation apparatus 1042 returns the API invocation request processing result to the client of the first user.

In the embodiment shown in FIG. 4A and FIG. 4B, for an API invocation request submitted by a user when the user accesses a different cloud platform, collaboration is performed between different cloud platforms by using the cloud federation service request coordination protocol, thereby meeting a service requirement and improving user experience.

For ease of understanding, the following describes the solutions in embodiments of this application by using cloud platforms of a large and medium-sized enterprise.

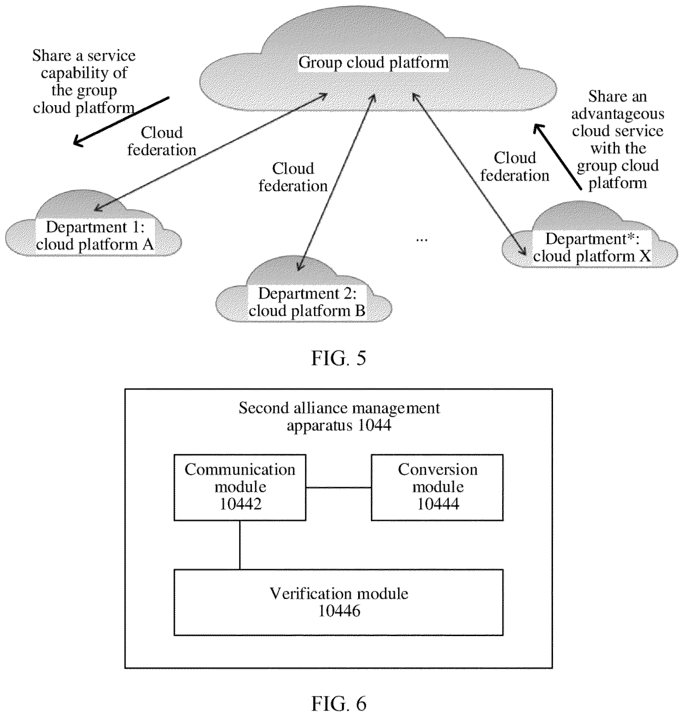

Refer to a diagram of a cloud federation group shown in FIG. 5. In the large and medium-sized enterprise, a plurality of different service organizations establish a plurality of dispersed cloud platforms. For example, a department 1 establishes a cloud platform A, a department 2 establishes a cloud platform B, ..., and a department * establishes a cloud platform X. The following situations may occur on these dispersed cloud platforms: (1) A service capability is limited, and it is difficult to sustainably develop and maintain. (2) An advantageous service is developed based on a service capability of an organization, and service capability sharing is supported. Therefore, a group cloud platform may be established, and the group cloud platform and the cloud platforms of the service organizations are constructed as a cloud federation group. The group cloud platform may share a service capability of the group cloud platform with the cloud platforms of the service organizations, and the cloud platforms of the service organizations may share an advantageous cloud service with the group cloud platform.

In one aspect, for a service organization with a limited capability, the service capability of the group cloud platform may be shared with the cloud platform of the service organization through the cloud federation group, and the shared service capability can help the service organization to enhance and expand the service capability. In another aspect, for a service organization that has developed an advantageous cloud service, the advantageous cloud service of the service organization may be shared with the group cloud platform or a cloud platform of another service organization through the cloud federation group, so that the entire enterprise benefits. In this way, IT resources and service capabilities of the service organizations can be quickly expanded, and intensive construction can be achieved.

In addition, in comparison with a solution of aggregating dispersed IT resources in an enterprise through data migration, this solution can avoid service interruption caused by the data migration, so that a live-network service is not affected. In addition, in this solution, application migration does not need to be performed, thereby resolving a problem that it is difficult to implement application migration across technology stacks due to uneven technology stacks of different cloud platforms of the enterprise.

It should be noted that the cloud platforms in FIG. 5 may be private clouds established by the enterprise. In some possible implementations, a cloud platform for establishing the cloud federation group may alternatively be a public cloud or a hybrid cloud. The enterprise may use a cloud service of a public cloud through the cloud federation group, and may also share a cloud service of the enterprise with the public cloud through the cloud federation group, thereby implementing external sales and realization of the cloud service of the enterprise.

Based on the foregoing methods provided in embodiments of this application, an embodiment of this application further provides an alliance management apparatus. For ease of description, the following uses the second alliance management apparatus 1044 as an example for description.

Refer to a diagram of a structure of the second alliance management apparatus 1044 shown in FIG. 6. The second alliance management apparatus 1044 and the second operation apparatus 1042 are deployed on the second cloud platform 104 in a cloud system 10. The cloud system 10 further includes the first cloud platform 102. The first cloud platform 102 and the second cloud platform 104 are allied clouds of each other, and the first operation apparatus 1022 and the first alliance management apparatus 1024 are deployed on the first cloud platform 102. The second alliance management apparatus 1044 includes:
a communication module 10442, configured to: receive a local identity credential obtaining request sent by the second operation apparatus, where the local identity credential obtaining request is used to request to obtain an identity credential of a first user on the second cloud platform, and the local identity credential obtaining request includes an identity credential of the first user on the first cloud platform; and obtain a federal identity credential of the first user from the first alliance management apparatus based on the identity credential of the first user on the first cloud platform; and
a conversion module 10444, configured to convert the federal identity credential of the first user into the identity credential of the first user on the second cloud platform.

The communication module 10442 is further configured to: return, to the second operation apparatus, the identity credential of the first user on the second cloud platform, to enable a client of the first user to obtain the identity credential, returned by the second operation apparatus, of the first user on the second cloud platform, and generate an application programming interface API invocation request based on the identity credential of the first user on the second cloud platform, where the API invocation request is used to invoke a cloud service shared by the second cloud platform.

In some possible implementations, the communication module 10442 is further configured to:
receive a first shared service catalog sent by the first alliance management apparatus, where the first shared service catalog includes information about a cloud service shared by the first cloud platform; and
receive a shared service catalog query request sent by the second operation apparatus, and return the first shared service catalog to the second operation apparatus, to enable a second user to select a service from the first shared service catalog for access.

In some possible implementations, the first shared service catalog includes one or more of a provisioning range, maximum sharing usage, and a feature limitation of the cloud service shared by the first cloud platform.

In some possible implementations, the communication module 10442 is further configured to:
receive a second identity mapping configured by an administrator of the second cloud platform, where the second identity mapping includes a mapping relationship between an identity credential of a tenant on the second cloud platform and a federal identity credential of the tenant.

The conversion module 10444 is specifically configured to:
convert, based on the second identity mapping, the federal identity credential of the first user in the tenant into the identity credential of the first user on the second cloud platform.

In some possible implementations, the communication module 10442 is specifically configured to:
send a federal identity credential obtaining request to the first alliance management apparatus, where the federal identity credential obtaining request includes the identity credential of the first user on the first cloud platform; and
receive the federal identity credential of the first user that is obtained by the first alliance management apparatus through conversion based on a first identity mapping, where the first identity mapping includes a mapping relationship between an identity credential of a tenant on the first cloud platform and the federal identity credential of the tenant, and the first user is a user in the tenant.

In some possible implementations, the communication module 10442 is further configured to:
receive a second cloud federation relationship configured by the administrator of the second cloud platform, where the second cloud federation relationship indicates a cloud federation relationship between the first cloud platform and the second cloud platform.

In some possible implementations, the communication module 10442 is further configured to:
receive a first cloud federation relationship that is configured by an administrator of the first cloud platform and that is sent by the first alliance management apparatus.

The apparatus 1044 further includes:
a verification module 10446, specifically configured to verify the first cloud federation relationship and the second cloud federation relationship.

In some possible implementations, the communication module 10442 is further configured to:
receive a coordination processing request sent by the second operation apparatus, where the coordination processing request is generated by the second operation apparatus based on the API invocation request;
send the coordination processing request to the first alliance management apparatus, and receive a coordination processing result obtained by the first alliance management apparatus from the first operation apparatus; and
send the coordination processing result to the second operation apparatus, to enable the second operation apparatus to generate an API invocation request processing result, where the API invocation request processing result is generated based on the coordination processing result.

In some possible implementations, the first cloud platform and the second cloud platform are cloud platforms provided by different cloud service providers or different cloud platforms provided by a same cloud service provider.

In some possible implementations, the first cloud platform is a public cloud, a private cloud, or a hybrid cloud, and the second cloud platform is a public cloud, a private cloud, or a hybrid cloud.

The second alliance management apparatus 1044 according to this embodiment of this application may correspondingly perform the methods described in embodiments of this application. In addition, the foregoing and other operations and/or functions of the modules/units of the second alliance management apparatus 1044 are respectively intended for implementing corresponding procedures of the methods in the embodiments shown in FIG. 2A and FIG. 2B to FIG. 4A and FIG. 4B. For brevity, details are not described herein again.

An embodiment of this application further provides a computer cluster. The computer cluster includes at least one computer, and any one of the at least one computer may be from a cloud environment or an edge environment, or may be a terminal device. The computer cluster is specifically configured to implement functions of the second alliance management apparatus 1044 in the embodiment shown in FIG. 6.

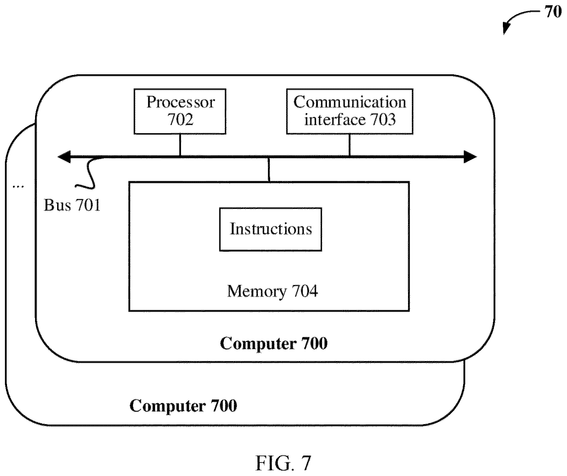

FIG. 7 provides a diagram of a structure of a computer cluster. As shown in FIG. 7, a computer cluster 70 includes a plurality of computers 700, and the computer 700 includes a bus 701, a processor 702, a communication interface 703, and a memory 704. The processor 702, the memory 704, and the communication interface 703 communicate with each other through the bus 701.

The bus 701 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line represents the bus in FIG. 7, but this does not mean that there is only one bus or only one type of bus.

The processor 702 may be any one or more of processors such as a central processing unit (central processing unit, CPU), a graphics processing unit (graphics processing unit, GPU), a microprocessor (microprocessor, MP), and a digital signal processor (digital signal processor, DSP).

The communication interface 703 is configured to communicate with the outside. For example, the communication interface 703 is configured to: receive a local identity credential obtaining request sent by a second operation apparatus 1042; obtain a federal identity credential of a first user from a first alliance management apparatus 1024 based on an identity credential of the first user on a first cloud platform 102; and return, to the second operation apparatus 1042, the identity credential of the first user on a second cloud platform 104.

The memory 704 may include a volatile memory (volatile memory), for example, a random access memory (random access memory, RAM). The memory 704 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 704 stores computer-readable instructions, and the processor 702 executes the computer-readable instructions, to enable the computer cluster 70 to perform the method for processing a cloud service in a cloud system 10 (or implement functions of the second alliance management apparatus 1044).

Specifically, when the embodiment of the apparatus shown in FIG. 6 is implemented, and a function of each module such as the communication module 10442, the conversion module 10444, or the verification module 10446 of the second alliance management apparatus 1044 shown in FIG. 6 is implemented by using software, software or program code required for performing the function of each module in FIG. 6 may be stored in at least one memory 704 in the computer cluster 70. The at least one processor 702 executes the program code stored in the memory 704, to enable the computer cluster 70 to perform the method for processing a cloud service in a cloud system 10.

An embodiment of this application further provides a computer-readable storage medium. The computer-readable storage medium may be any usable medium that can be used by a computer for storage, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computer or a computer cluster to perform the method for processing a cloud service in a cloud system 10.

An embodiment of this application further provides a computer program product. The computer program product includes one or more computer instructions. When the computer instructions are loaded and executed on a computer, the procedures or functions according to embodiments of this application are all or partially generated. The computer instructions may be stored in a computer-readable storage medium, or may be transmitted from one computer-readable storage medium to another computer-readable storage medium. For example, the computer instructions may be transmitted from a website, computer, or data center to another website, computer, or data center in a wired (for example, a coaxial cable, an optical fiber, or a digital subscriber line (DSL)) or wireless (for example, infrared, radio, or microwave) manner. The computer program product may be a software installation package. When any one of the methods for processing a cloud service in a cloud system 10 needs to be used, the computer program product may be downloaded and executed on the computer or a computer cluster.

Descriptions of procedures or structures corresponding to the accompanying drawings have respective focuses. For a part that is not described in detail in a procedure or structure, refer to related descriptions of other procedures or structures.

## Claims

1. A method for processing a cloud service in a cloud system, wherein the cloud system comprises a first cloud platform and a second cloud platform, the first cloud platform and the second cloud platform are allied clouds of each other, a first operation apparatus and a first alliance management apparatus are deployed on the first cloud platform, and a second operation apparatus and a second alliance management apparatus are deployed on the second cloud platform; and the method comprises:
receiving, by the second alliance management apparatus, a local identity credential obtaining request sent by the second operation apparatus, wherein the local identity credential obtaining request is used to request to obtain an identity credential of a first user on the second cloud platform, and the local identity credential obtaining request comprises an identity credential of the first user on the first cloud platform;
obtaining, by the second alliance management apparatus, a federal identity credential of the first user from the first alliance management apparatus based on the identity credential of the first user on the first cloud platform, and converting the federal identity credential of the first user into the identity credential of the first user on the second cloud platform; and
returning, by the second alliance management apparatus to the second operation apparatus, the identity credential of the first user on the second cloud platform, to enable a client of the first user to obtain the identity credential, returned by the second operation apparatus, of the first user on the second cloud platform, and generate an application programming interface API invocation request based on the identity credential of the first user on the second cloud platform, wherein the API invocation request is used to invoke a cloud service shared by the second cloud platform.

2. The method according to claim 1, wherein the method further comprises:
receiving, by the second alliance management apparatus, a first shared service catalog sent by the first alliance management apparatus, wherein the first shared service catalog comprises information about a cloud service shared by the first cloud platform; and
receiving, by the second alliance management apparatus, a shared service catalog query request sent by the second operation apparatus, and returning the first shared service catalog to the second operation apparatus, to enable a second user to select a service from the first shared service catalog for access.

3. The method according to claim 2, wherein the first shared service catalog comprises one or more of a provisioning range, maximum sharing usage, and a feature limitation of the cloud service shared by the first cloud platform.

4. The method according to any one of claims 1 to 3, wherein the method further comprises:
receiving, by the second alliance management apparatus, a second identity mapping configured by an administrator of the second cloud platform, wherein the second identity mapping comprises a mapping relationship between an identity credential of a tenant on the second cloud platform and a federal identity credential of the tenant; and
the converting, by the second alliance management apparatus, the federal identity credential of the first user into the identity credential of the first user on the second cloud platform comprises:
converting, by the second alliance management apparatus based on the second identity mapping, the federal identity credential of the first user in the tenant into the identity credential of the first user on the second cloud platform.

5. The method according to any one of claims 1 to 3, wherein the obtaining, by the second alliance management apparatus, a federal identity credential of the first user from the first alliance management apparatus based on the identity credential of the first user on the first cloud platform comprises:
sending, by the second alliance management apparatus, a federal identity credential obtaining request to the first alliance management apparatus, wherein the federal identity credential obtaining request comprises the identity credential of the first user on the first cloud platform; and
receiving, by the second alliance management apparatus, the federal identity credential of the first user that is obtained by the first alliance management apparatus through conversion based on a first identity mapping, wherein the first identity mapping comprises a mapping relationship between an identity credential of a tenant on the first cloud platform and a federal identity credential of the tenant, and the first user is a user in the tenant.

6. The method according to any one of claims 1 to 3, wherein the method further comprises:
receiving, by the second alliance management apparatus, a second cloud federation relationship configured by an administrator of the second cloud platform, wherein the second cloud federation relationship indicates a cloud federation relationship between the first cloud platform and the second cloud platform.

7. The method according to claim 6, wherein the method further comprises:
receiving, by the second alliance management apparatus, a first cloud federation relationship that is configured by an administrator of the first cloud platform and that is sent by the first alliance management apparatus; and
verifying, by the second alliance management apparatus, the first cloud federation relationship and the second cloud federation relationship.

8. The method according to any one of claims 1 to 7, wherein the method further comprises:
receiving, by the second alliance management apparatus, a coordination processing request sent by the second operation apparatus, wherein the coordination processing request is generated by the second operation apparatus based on the API invocation request;
sending, by the second alliance management apparatus, the coordination processing request to the first alliance management apparatus, and receiving a coordination processing result obtained by the first alliance management apparatus from the first operation apparatus; and
sending, by the second alliance management apparatus, the coordination processing result to the second operation apparatus, to enable the second operation apparatus to generate an API invocation request processing result, wherein the API invocation request processing result is generated based on the coordination processing result.

9. The method according to any one of claims 1 to 8, wherein the first cloud platform and the second cloud platform are cloud platforms provided by different cloud service providers or different cloud platforms provided by a same cloud service provider.

10. The method according to any one of claims 1 to 9, wherein the first cloud platform is a public cloud, a private cloud, or a hybrid cloud, and the second cloud platform is a public cloud, a private cloud, or a hybrid cloud.

11. A second alliance management apparatus, wherein the second alliance management apparatus and a second operation apparatus are deployed on a second cloud platform in a cloud system, the cloud system further comprises a first cloud platform, the first cloud platform and the second cloud platform are allied clouds of each other, and a first operation apparatus and a first alliance management apparatus are deployed on the first cloud platform; and the second alliance management apparatus comprises:
a communication module, configured to: receive a local identity credential obtaining request sent by the second operation apparatus, wherein the local identity credential obtaining request is used to request to obtain an identity credential of a first user on the second cloud platform, and the local identity credential obtaining request comprises an identity credential of the first user on the first cloud platform; and obtain a federal identity credential of the first user from the first alliance management apparatus based on the identity credential of the first user on the first cloud platform;
a conversion module, configured to convert the federal identity credential of the first user into the identity credential of the first user on the second cloud platform, wherein
the communication module is further configured to: return, to the second operation apparatus, the identity credential of the first user on the second cloud platform, to enable a client of the first user to obtain the identity credential, returned by the second operation apparatus, of the first user on the second cloud platform, and generate an application programming interface API invocation request based on the identity credential of the first user on the second cloud platform, wherein the API invocation request is used to invoke a cloud service shared by the second cloud platform.

12. The apparatus according to claim 11, wherein the communication module is further configured to:
receive a first shared service catalog sent by the first alliance management apparatus, wherein the first shared service catalog comprises information about a cloud service shared by the first cloud platform; and
receive a shared service catalog query request sent by the second operation apparatus, and return the first shared service catalog to the second operation apparatus, to enable a second user to select a service from the first shared service catalog for access.

13. The apparatus according to claim 12, wherein the first shared service catalog comprises one or more of a provisioning range, maximum sharing usage, and a feature limitation of the cloud service shared by the first cloud platform.

14. The apparatus according to any one of claims 11 to 13, wherein the communication module is further configured to:
receive a second identity mapping configured by an administrator of the second cloud platform, wherein the second identity mapping comprises a mapping relationship between an identity credential of a tenant on the second cloud platform and a federal identity credential of the tenant; and
the conversion module is specifically configured to:
convert, based on the second identity mapping, the federal identity credential of the first user in the tenant into the identity credential of the first user on the second cloud platform.

15. The apparatus according to any one of claims 11 to 13, wherein the communication module is specifically configured to:
send a federal identity credential obtaining request to the first alliance management apparatus, wherein the federal identity credential obtaining request comprises the identity credential of the first user on the first cloud platform; and
receive the federal identity credential of the first user that is obtained by the first alliance management apparatus through conversion based on a first identity mapping, wherein the first identity mapping comprises a mapping relationship between an identity credential of a tenant on the first cloud platform and the federal identity credential of the tenant, and the first user is a user in the tenant.

16. The apparatus according to any one of claims 11 to 13, wherein the communication module is further configured to:
receive a second cloud federation relationship configured by an administrator of the second cloud platform, wherein the second cloud federation relationship indicates a cloud federation relationship between the first cloud platform and the second cloud platform.

17. The apparatus according to claim 16, wherein the communication module is further configured to:
receive a first cloud federation relationship that is configured by an administrator of the first cloud platform and that is sent by the first alliance management apparatus; and
the apparatus further comprises:
a verification module, specifically configured to verify the first cloud federation relationship and the second cloud federation relationship.

18. The apparatus according to any one of claims 11 to 17, wherein the communication module is further configured to:
receive a coordination processing request sent by the second operation apparatus, wherein the coordination processing request is generated by the second operation apparatus based on the API invocation request;
send the coordination processing request to the first alliance management apparatus, and receive a coordination processing result obtained by the first alliance management apparatus from the first operation apparatus; and
send the coordination processing result to the second operation apparatus, to enable the second operation apparatus to generate an API invocation request processing result, wherein the API invocation request processing result is generated based on the coordination processing result.

19. The apparatus according to any one of claims 11 to 18, wherein the first cloud platform and the second cloud platform are cloud platforms provided by different cloud service providers or different cloud platforms provided by a same cloud service provider.

20. The apparatus according to any one of claims 11 to 19, wherein the first cloud platform is a public cloud, a private cloud, or a hybrid cloud, and the second cloud platform is a public cloud, a private cloud, or a hybrid cloud.

21. A computer cluster, wherein the computer cluster comprises at least one computer, the at least one computer comprises at least one processor and at least one memory, the at least one memory stores computer-readable instructions, and the at least one processor executes the computer-readable instructions, to enable the computer cluster to perform the method according to any one of claims 1 to 10.

22. A computer-readable storage medium, comprising computer-readable instructions, wherein when the computer-readable instructions are run on a computer cluster, the computer cluster is enabled to perform the method according to any one of claims 1 to 10.

23. A computer program product, comprising computer-readable instructions, wherein when the computer-readable instructions are run on a computer cluster, the computer cluster is enabled to perform the method according to any one of claims 1 to 10.
